# FASCICULE DE BREVET EUROPEEN

(11) **EP 2 265 697 B1**
(45) Date de publication et mention de la délivrance du brevet: **12.07.2017**
(21) Numéro de dépôt: 09742270.3
(22) Date de dépôt: 08.04.2009
(51) Int. Cl.: C10J 3/57, C10B 49/14, C01B 3/36

(54) **GAZEIFICATION DE MATERIAUX ORGANIQUES COMBUSTIBLES**
GASIFIZIERUNG BRENNBARER ORGANISCHER MATERIALIEN
GASIFICATION OF COMBUSTIBLE ORGANIC MATERIALS

(30) Priorité: 09.04.2008 FR 0852382
(43) Date de publication de la demande: 29.12.2010
(73) Titulaire: Saint-Gobain Glass France, 92400 Courbevoie (FR)
(72) Inventeur: GALLEY, David, F-75017 Paris (FR); JEANVOINE, Pierre, F-78100 Saint-Germain-en-Laye (FR)
(74) Mandataire: Saint-Gobain Recherche
(86) Numéro de dépôt international: PCT/FR2009/050614
(87) Numéro de publication internationale: WO 2009/136072

(56) Documents cités:
- EP-A- 1 148 295
- WO-A-2004/000723
- FR-A- 1 006 866
- FR-A- 2 735 791
- JP-A- 2006 036 804
- US-A- 4 216 199
- MACCORMAC M ET AL: "Gasification of coal in an experimental Rummel double-shaft slag-bath gasifier" INSTITUTION OF GAS ENGINEERS. JOURNAL, INSTITUTION OF GAS ENGINEERS, GB, vol. 5, 1 mai 1965 (1965-05-01), pages 385-399, XP008098610 ISSN: 0020-3432
- EMERY J J: "Slag utilization in pavement construction" ASTM SPECIAL TECHNICAL PUBLICATION, PHILADELPHIA, PA, no. 774, 1 janvier 1982 (1982-01-01), pages 95-118, XP008098625 ISSN: 0066-0558

## Description

L'invention concerne un procédé pour transformer un matériau solide combustible ou liquide combustible en un gaz combustible.

L'objectif de l'invention est de produire un gaz combustible directement à partir de matières solides ou liquides combustibles comme de la biomasse et/ou des déchets comme les pneus usagés, les plastiques, résidus de broyage automobile, boues , matières combustibles de substitutions (dites « MCS »), voire même des déchets ménagers, etc, ou indirectement à partir de ces mêmes matières préalablement transformées en huile après une première opération de pyrolyse.

Selon l'invention, on propose une technologie qui vise à suppléer à l'emploi des énergies fossiles dans les procédés industriels, à baisser les émissions de CO₂ dans l'atmosphère et le coût de l'énergie. En effet, dans le but de réduire la concentration des gaz à effet de serre dans l'atmosphère, on encourage les industriels par une politique fiscale appropriée à utiliser non pas des énergies fossiles (pétrole, gaz naturel) car cela ramène toujours plus de carbone et de CO₂ à la surface de la terre, mais du combustible renouvelable comme de la biomasse qui lors de sa croissance absorbe dans l'atmosphère le CO₂ qui sera ensuite rejeté par sa combustion. Cependant, on ne peut pas toujours utiliser directement de la biomasse dans les procédés industriels, notamment car on subit la composition de cette biomasse, laquelle amène généralement des cendres.

On a déjà proposé de générer un gaz combustible à partir de biomasse en pyrolysant celle-ci à plus de 500°C voire plus de 1000°C dans des lits fixes ou fluidisés comprenant des galets ou des billes céramique parcourues par de la vapeur d'eau et/ou de l'air ou de l'oxygène pur. Cependant, les cendres issues de la biomasse s'accumulent dans le lit ce qui ne manque pas de bloquer ce dernier. Un gazéificateur de ce type doit donc être régulièrement arrêté et nettoyé.

L'article de MACCORMAC « Gasification of coal in an experimental Rummel double-shaft slag-bath gasifier » , IGE Journal, vol 5 , 1 Mai 1965, pp 385-399 ,enseigne la gazéification du charbon dans un laitier. Une combustion immergée dans le laitier est testée mais abandonnée suite aux problèmes engendrés par une abondante formation de mousse ainsi que la précipitation de fer. Le charbon ainsi que la plupart des matières organiques du type biomasse contiennent en effet du fer. Même sans combustion immergée, de la mousse se forme et du fer précipite, nécessitant l'arrêt du fonctionnement. Le fer métallique est difficile à évacuer car il nécessite de très fortes températures, de l'ordre de 1500°C.

On a maintenant trouvé un procédé fonctionnant en continu permettant de gazeïfier de la matière organique dans une masse fondu, tout en évitant la précipitation du fer. Selon l'invention, on utilise comme masse fondue un silicate et l'on renouvelle en continu ledit silicate en l'évacuant et en le remplaçant régulièrement au cours du fonctionnement. Ce renouvellement continu du bain de silicate permet d'évacuer en continu le fer dont la concentration reste ainsi en-dessous de sa limite de précipitation. Du fait de sa forte teneur en silice, le silicate mousse peu ou pas et de plus, il solubilise bien le fer. La faible tendance du silicate à mousser rend même possible de procurer un apport calorifique dans le silicate fondu par combustion immergée.

Selon l'invention, la gazéification de la matière organique produisant un gaz combustible comprend la réaction de vapeur d'eau ou d'oxygène ou de CO₂ avec une matière organique en contact avec un silicate fondu, de la chaleur étant apporté dans le silicate fondu. L'expression « ou » dans la phrase précédente recouvre bien entendu l'expression « et/ou ». L'expression « en contact » recouvre le fait que la matière organique peut être au-dessus du bain de silicate, en surnageant, ou être à l'intérieur du bain de silicate, ou à la fois dans et sur le bain de silicate.

De préférence, le gaz oxydant réagissant avec la matière organique contient au moins 30% en volume d'eau. Il peut même contenir 100% d'eau. Le gaz oxydant peut aussi être de l'oxygène, lequel peut être apporté par de l'air. Ainsi, le gaz de réaction avec la matière organique peut être de l'air ou de l'air enrichi en oxygène. L'air peut être humide. Il peut s'agir d'air chargé de vapeur d'eau. Ainsi, de l'air peut apporter à la fois de l'oxygène, de l'eau et du CO₂.

Le procédé selon l'invention présente les avantages suivants :
- le gaz produit est de haut PCI (Pouvoir Calorifique Inférieur, appelé « lower heating value » ou « LHV » en anglais), notamment de 5 à 25 MJ/Nm³,
- les cendres qui peuvent contenir des oxydes indésirables et des métaux lourds sont inertées (neutralisées) en une masse vitreuse, qui peut être évacuée en continu au cours de la gazéification et qui peut être granulée pour mise en décharge (en classe 3, c'est-à-dire classé en déchet inerte et non-dangereux) ou utilisation en granulats de génie civil par exemple comme charge de matériaux du type bitume ou asphalte pour les routes, chaussées, ou autres matériaux de construction,
- le procédé est compact et d'investissement limité, et peut fonctionner de façon automatisée et continue.

Ainsi, le procédé selon l'invention est à la fois un procédé de production de gaz combustible (du type « gaz de synthèse » ou « syngas », comprenant du CO et de l'hydrogène) et un procédé de production de matériaux de construction. Le fait que le silicate soit liquide rend aisé le fonctionnement de tout le procédé puisque les cendres de la matière organique sont entrainées par écoulement du silicate hors de la cuve. Le renouvellement du silicate dans le bain est tel qu'il maintient une forte teneur en silice, généralement au moins 40% en poids de silice.

Le procédé selon l'invention repose sur le principe de la gazéification en milieu silicate fondu à haute température par un gaz relativement oxydant par rapport au carbone. Dans le cadre de la présente demande, on peut appeler le gaz réagissant avec la matière organique « gaz oxydant ». Le gaz n'est pas totalement oxydant par rapport au carbone car il ne s'agit pas de créer trop de CO₂, mais on cherche au contraire à produire le plus possible de gaz réducteur tel que CO et H₂. Cette réaction de gazéification est en fait endothermique et c'est pourquoi un apport énergétique (ou calorifique) est apporté au système directement au sein du bain de silicate.

Ainsi, l'invention concerne en premier lieu un procédé de fabrication de gaz combustible ayant un pouvoir calorifique inférieur d'au moins 1 MJ/Nm³, comprenant la réaction d'un gaz oxydant comprenant de la vapeur d'eau ou de l'oxygène ou du CO2 avec une matière organique en contact avec un bain de silicate fondu contenu dans une cuve et comprenant un apport calorifique dans le silicate fondu, ledit procédé fonctionnant en continu, du silicate étant régulièrement évacué de la cuve et des matières vitrifiables étant régulièrement introduites pour alimenter le bain de silicate, produisant un renouvellement continu du bain de silicate permettant d'évacuer en continu du fer dont la concentration reste ainsi en-dessous de sa limite de précipitation dans le bain.

La température du silicate est ajustée entre 800°C et 1700°C en fonction de sa composition chimique. Il comprend de la silice et au moins un oxyde du groupe suivant : CaO, Fe₂O₃, Na₂O, K₂O. L'oxyde ajouté à la silice a pour fonction de baisser la viscosité du silicate pour atteindre une fluidité suffisante favorable à l'agitation et donc aux réactions souhaitées. La viscosité visée va généralement de 10 à 1000 poises et de préférence 20 à 500 poises à la température de fonctionnement.

L'ensemble des silicates au sens de l'invention recouvre notamment les laitiers, le verre et les silicates plus ou moins hydrosolubles comme les silicates d'alcalins (tels que Na, K) et/ou d'alcalino-terreux (tels que Ca, Mg), éventuellement sous forme de silicates mixtes (plusieurs silicates d'alcalins et/ou d'alcalino-terreux).

Le silicate comprend généralement 40 à 80 % en poids de SiO₂. Il comprend également au moins un autre oxyde pour fluidifier le bain, ledit oxyde pouvant généralement être choisi dans le groupe suivant : CaO, Fe₂O₃, Na₂O, K₂O.

Ainsi, le silicate peut notamment comprendre :
0 à 20 % en poids de CaO,
0 à 20 % en poids de Fe₂O₃,
0 à 20% en poids d'oxyde d'alcalin comme Na₂O ou K₂O (ce qui recouvre Na₂O et/ou K₂O),
la somme de la masse de CaO + Fe₂O₃ + oxyde d'alcalin n'étant généralement pas nulle et allant de préférence de 5 à 60 % en poids.

Il peut également comprendre notamment MgO, Al₂O₃, TiO₂, MnO₂, P₂O₅, SO₂, Cl.

Une composition de silicate particulièrement adaptée contient :
60 à 80 % en poids de SiO₂
10 à 20%. % en poids de CaO
5 à 15 % en poids de Fe₂O₃
2 à 10 % en poids d'oxyde d'alcalin (comme Na₂O ou K₂O, ce qui recouvre Na₂O et/ou K₂O).

L'oxyde ajouté à la silice a pour fonction de baisser la viscosité du silicate pour atteindre une fluidité suffisante favorable à l'agitation et donc aux réactions souhaitées. La viscosité visée va généralement de 10 à 1000 poises et de préférence de 20 à 500 poises à la température de fonctionnement, c'est-à-dire entre 800°C et 1700°C.

Le silicate fondu peut notamment être contenu dans une cuve équipée d'un garnissage en réfractaire avec un système de trop plein à siphon (ou gorge) pour évacuer le silicate fondu en excès.

Le silicate est maintenu en fusion grâce à l'apport calorifique qui peut être du type électrique (généralement des électrodes noyées dans le silicate comme des électrodes en molybdène, graphite, fer suivant les pratiques bien connues dans l'industrie du verre) ou qui peut provenir de l'injection d'un comburant qui brûle partiellement le carbone résultant de la gazéification des matières combustibles introduites dans le silicate, avec éventuellement un apport d'un autre gaz combustible. Ce gaz combustible ajouté peut être le propre gaz combustible (syngas) produit par le dispositif selon l'invention, après éventuel refroidissement, purification, filtration et compression, ou un gaz non produit par l'installation comme l'hydrogène ou un gaz naturel fossile ou un mélange du syngas avec l'un ou l'autre ou les deux gaz précédents, ou encore un combustible liquide. La purification sert essentiellement à éliminer l'eau et la filtration sert essentiellement à enlever les poussières et goudrons. L'apport calorifique au silicate fondu, comme cette réaction exothermique de combustion, est généralement le seul apport d'énergie. On peut aussi combiner un chauffage électrique et un chauffage par combustion. Dans le cadre de l'invention, l'apport calorifique est réalisé au sein même du silicate par un moyen immergé, notamment du type électrode immergée ou combustion immergée. Pour le cas d'une combustion, un comburant est injecté dans le silicate, lequel est généralement de l'oxygène, lequel est peut être apporté par de l'air. Ainsi, on peut utiliser comme comburant de l'oxygène pur, de l'air ou de l'air enrichi en oxygène. On utilise de préférence un comburant comprenant plus de 80 vol % d'oxygène pur voire de l'oxygène pur car cela implique un volume réduit de gaz (si l'on compare à l'air par exemple), ce qui réduit d'autant la tendance à la formation de mousse. La combustion immergée est un moyen préféré d'apport calorifique car elle contribue au brassage des matières dans le bain de silicate fondu. Ce brassage va dans le sens d'une meilleure homogénéité du bain, ce qui est favorable à l'absence de précipitations comme celle du fer. De plus, on préfère que sa flamme soit oxydante car cela va dans le sens de l'oxydation des particules métalliques en suspension, ce qui prévient encore plus les précipitations comme celle du fer. L'excès d'oxygène pour cette combustion immergée joue un double rôle : 1) empêcher la précipitation de métal et 2) le surplus d'oxygène peut participer à la réaction de gazéification. Les gaz injectés dans le silicate pour cette combustion immergé font remonter les particules s'étant éventuellement formées. L'utilisation d'un comburant à fort taux d'oxygène ou d'oxygène pur pour cette combustion immergée est donc un excellent compromis permettant le brassage du bain et la quasi absence de fer métallique sans provoquer trop de mousse.

Les matières combustibles solides ou liquides à gazéifier, sont introduites de préférence au sein du silicate fondu (sous le niveau de la surface liquide du silicate), au moyen d'une enfourneuse adaptée (système à vis ou à piston, pompe dans le cas d'un liquide...). Elles peuvent aussi être introduites par-dessus la surface de silicate fondu.

Selon le gaz choisi pour réagir avec la matière organique, la gazéification est produite par au moins l'une des réactions suivantes:
- H₂O + C → CO + H₂ (1)
- 2 H₂O + C → CO₂ + 2 H₂ (2)
- C + CO₂ → 2 CO (3)
- C+ ½ O₂ → CO (4)
ces réactions étant endothermiques.

Le cas échéant, si l'apport calorifique dans le silicate est réalisé par combustion immergée, la réaction de combustion de l'oxygène avec le carbone de la matière organique et/ou le syngas, a lieu selon :
- C + O₂ → CO₂ (5)
- (CO + H₂) + O₂ → CO₂ + H₂O (6)
ces réactions étant exothermiques.

L'eau et le CO₂ peuvent ainsi notamment résulter de la combustion immergée du syngas ou d'un mélange de syngas avec CH₄ et/ou H₂ et/ou tout autre gaz combustible avec l'avantage d'être injectées ensuite dans les bonnes proportions sur la masse à gazéifier à température élevée. De l'eau supplémentaire peut aussi être introduite sous forme de vapeur ou d'humidité des matières organiques introduites.

La production de CO ou H₂ à partir de la matière organique est endothermique et c'est pourquoi on introduit un apport calorifique. L'apport calorifique est généralement limité au minimum nécessaire à la compensation des pertes thermiques de l'appareil et de la réaction endothermique de gazéification, ainsi que, le cas échéant, pour chauffer les gaz entrants (H₂O, air, O₂, CO₂).

Pour le cas ou l'on pratique l'apport calorifique par combustion immergée on peut séparer celle-ci de l'endroit où on va injecter les gaz oxydants nécessaires à la gazéification, ceci dans le but d'augmenter le pouvoir calorifique du gaz combustible produit. Dans ce cas, il convient d'assurer un apport de chaleur permanent vers la zone de réaction avec le gaz oxydant, en provenance de la zone de combustion immergée. Ceci peut être réalisé par la mise en circulation du silicate liquide par rapport aux points fixes d'injection des matières combustibles, du gaz oxydant, et de comburant. Cette mise en circulation peut être réalisée par exemple par convection naturelle résultat d'une différence de température et/ou de profondeur de la cuve, ou par agitation (notamment mise en rotation) du silicate notamment au moyen d'un agitateur par exemple métallique, notamment en acier résistant, notamment à vitesse variable, notamment du type magnétohydrodynamique (ou « MHD ») ou par mise en mouvement (mise en rotation par exemple) de la cuve elle-même, ou par tout autre moyen. Dans ce cas, il y a deux sorties de fluides gazeux: 1) le gaz combustible que l'on dirige vers son utilisation, 2) les fumées de combustion du carbone résiduel (non transformé en gaz combustible) et/ou de la combustion immergée qui rejoignent un autre circuit comme par exemple celui des fumées principales du four industriel utilisateur. La séparation de ces deux gaz (gaz combustible produit d'une part et gaz de combustion d'autre part) est assurée grâce à deux cheminées séparées, l'une étant placée à proximité et même juste au-dessus du conduit d'introduction du gaz oxydant (eau ou O₂ ou CO₂), et l'autre étant placé à proximité et même juste au-dessus du conduit d'introduction du comburant. Ainsi, l'invention concerne également le procédé selon lequel la combustion immergée d'une part et la réaction entre le gaz oxydant et la matière organique d'autre part sont réalisés en des zones suffisamment séparées pour que les fumées de combustion et le gaz combustible puissent être récupérés par des cheminées différentes.

De façon remarquable, le gaz oxydant peut-être généré au moins partiellement, voire même totalement, au sein du bain de silicate fondu à partir de la combustion immergée lui apportant des calories. En effet, la combustion immergée entre un combustible et un comburant génère de l'eau et du CO₂ qui vont monter sous forme de bulles dans le bain de silicate pour réagir ensuite avec les matières organiques qui se trouvent plutôt dans la partie haute du bain en surnageant plus ou moins. Le combustible peut être une partie du propre gaz combustible créé selon l'invention et que l'on réinjecte dans le bain. On peut ajouter un autre combustible à ce propre gaz combustible, mais cela n'est pas forcément indispensable.

Le gaz combustible produit selon l'invention contient de l'hydrogène (H₂) et du monoxyde de carbone (CO). Il contient généralement aussi du méthane (CH₄). La somme des pourcentages molaires d'hydrogène et de monoxyde de carbone est d'au moins 10% et même généralement d'au moins 30%, voire même d'au moins 35%. Ces pourcentages en gaz réducteur (H₂ et CO) sont atteints dès lors que le gaz oxydant rencontre suffisamment de matière organique dans sa progression.

Ce gaz combustible a généralement un pouvoir calorifique inférieur d'au moins 1 MJ/Nm³ et même généralement d'au moins 5 MJ/Nm³ et pouvant même atteindre au moins 10 MJ/Nm³. Il est généralement inférieur à 30 MJ/Nm³.

Le rendement est l'énergie utile (énergie du gaz produit et utilisé à l'extérieur) divisé par toutes les énergies entrantes (matière combustible et énergie provenant de l'extérieure éventuelle). Ce rendement va généralement de 10 à 80%.

Le procédé selon l'invention peut notamment fonctionner de manière continue: le gaz produit sort chaud (500°C à 1300°C) en haut de l'appareil et peut être dirigé vers le procédé industriel qui l'utilisera: four de verrerie, générateur d'électricité, usine métallurgique, etc. Le gaz combustible produit étant chaud, on a intérêt, pour profiter au maximum de sa chaleur, de rapprocher le dispositif selon l'invention de l'installation qui l'utilisera, pour limiter les pertes thermiques. Ceci a aussi comme avantage de limiter ou d'éviter les condensations de goudrons dans le conduit amenant le gaz combustible à l'installation d'utilisation. On peut aussi refroidir ce gaz combustible par exemple en convertissant son énergie, par exemple en vapeur d'eau au moyen d'une chaudière, le cas échéant le filtrer (élimination des poussières), le purifier (élimination de l'eau), le comprimer et le stocker avant de l'envoyer dans l'installation d'utilisation. Dans ce cas, l'utilisation peut être plus éloignée. Dans un procédé fonctionnant en continu, le silicate est contenu dans une cuve, du silicate étant régulièrement évacué de la cuve et des matières vitrifiables sont régulièrement introduites pour alimenter le bain de silicate.

Certaines matières organiques solides notamment du type biomasse peuvent être transformées en un liquide visqueux (ou huile) par pyrolyse vers 500°C sous pression (comme le pétrole s'est constitué naturellement à partir de matières organiques). On peut donc, préalablement à la gazéification dans le dispositif selon l'invention, transformer ces matières organiques en huile. Ceci procure l'avantage de réduire considérablement le volume de matière à introduire dans le gazéificateur selon l'invention. De plus, cette matière condensée sous forme d'huile devient transportable dans la mesure où les coûts de transport deviennent alors raisonnables, ce qui n'est pas vraiment le cas de la biomasse de départ, beaucoup trop volumineuse eu égard à l'énergie qu'elle procure.

La gazéification selon l'invention peut être réalisée sous pression, ce qui permet alors de délivrer le gaz combustible sous pression. Ceci peut être souhaité, notamment pour atteindre des impulsions suffisantes en gaz combustible aux brûleurs de l'utilisation finale. La gazéification sous pression est plus facile à réaliser à partir d'une huile parce que l'enfournement de l'huile peut s'effectuer au moyen d'une pompe.

Le gaz combustible généré par le dispositif selon l'invention peut être utilisé pour alimenter en tant que combustible un brûleur de four industriel, comme un four de verrerie. Ce gaz est alors brûlé par de l'air secondaire (l'air primaire étant alors celui injecté dans le silicate), lequel pouvant avoir subi une régénération thermique dans un régénérateur suivant le principe bien connu de l'homme du métier de l'industrie du verre (alternance fumées / air dans des régénérateurs).

Le cas échéant, le gaz combustible généré selon l'invention peut être chauffé avant d'être brûlé dans son utilisation finale (on parle de double régénération si le comburant et le combustible sont tous deux réchauffés). Cependant, ceci n'a pas forcément d'intérêt si le gaz produit est de haut pouvoir calorifique et s'il est déjà suffisamment chaud. C'est donc un avantage du procédé selon l'invention lorsque le gaz combustible est utilisé directement après sa synthèse car ce gaz est généré chaud, ce qui est avantageux dans certaines applications comme notamment la combustion en brûleur de four de verrerie.

Le gaz combustible peut éventuellement sortir à une température relativement modérée (<500°C) notamment s'il est refroidi par les couches de matière organique ou de charbon fraichement introduites qu'il traverse dans le dispositif. Comme c'est un gaz de relativement faible PCI (si l'on compare avec le gaz naturel), on préfère le réchauffer avant de le brûler dans le four utilisateur (exemple : four verrier), pour obtenir la température adiabatique de flamme suffisante, notamment à la fusion du verre. Pour ce faire, on peut prévoir un système de double régénération : dans une première alternance, les fumées chaudes issues de la combustion dans le four utilisateur (notamment four à verre) échauffent deux chambres de régénération : une pour l'air de combustion (comme dans les fours à gaz modernes), l'autre pour le gaz combustible. Dans l'alternance suivante, on inverse les circuits gazeux et c'est alors l'air et le gaz qui s'échauffent dans ces chambres : les deux brûlent alors à leur arrivée dans le four utilisateur en produisant les fumées chaudes et en cédant leur chaleur à la charge. Les deux chambres, à air et à gaz combustible, doivent bien sûr être étanches l'une par rapport à l'autre sous peine de combustion prématurée ou même d'explosion.

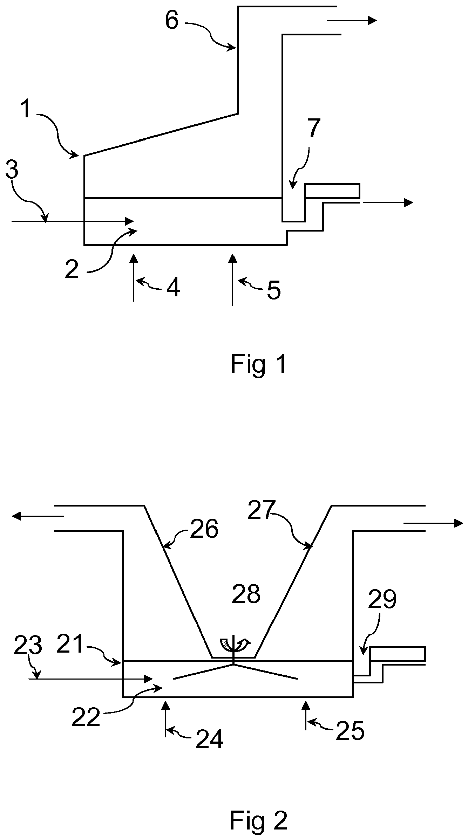

Pour éviter de devoir chauffer le gaz combustible avant son utilisation dans le four utilisateur, il est recommandé d'augmenter la température de sortie du gaz sortant du dispositif de fabrication de gaz combustible (dit « gazogène ») et son PCI de manière à assurer une température adiabatique de flamme suffisante. On peut obtenir ce résultat par l'utilisation d'un gazogène de très haute température de gazéification (> 1000°C) et/ou fonctionnant avec séparation des injections de comburant et de gaz oxydant (sur le principe des deux cheminées de la figure 2). Dans ce cas en effet, on a une décomposition totale des goudrons et condensables, et une maximisation du rapport CO/CO₂ et du taux de H₂ dans le gaz combustible produit. Le gaz est suffisamment chaud (> 500°C) et son PCI suffisamment élevé (> 20 kJ/kg) pour alimenter directement le four utilisateur, notamment un four à verre, sans avoir à passer par une régénération. Il brûle alors à son arrivée dans le four avec l'air de combustion qui pourra avoir subi la régénération classique. Cette solution présente l'avantage de ne pas devoir réchauffer le gaz dans un régénérateur céramique toujours difficile à étancher : on minimise ainsi les risques de combustion prématurée ou d'explosion.

On peut produire de la vapeur d'eau et/ou de l'air/O₂ chaud nécessaire au gazéificateur par une chaudière ou un échangeur utilisant l'énergie résiduelle des fumées. La vapeur d'eau nécessaire au procédé selon l'invention en tant que gaz oxydant peut être produite au moyen d'une chaudière. Cette chaudière peut être installée sur le circuit des fumées principales d'un four utilisateur (comme un four de verrerie ou un autre procédé industriel) du gaz combustible produit selon l'invention ou sur le circuit de refroidissement du gaz combustible produit. La chaleur de ces fumées ou de ces gaz sert à vaporiser l'eau. En particulier, pour le cas de l'existence de deux cheminées de collecte des gaz (de combustion d'une part et de gaz combustible d'autre part), la chaudière peut être installée sur le circuit des fumées de combustion s'échappant du dispositif selon l'invention. De préférence, la vapeur d'eau est à une température entre 100 et 800°C sous une pression entre 1 bar et 100 bars. Il est également décrit un dispositif industriel comprenant un four utilisateur du gaz combustible produit en le brûlant et dont la chaleur des fumées de combustion sert à vaporiser de l'eau, laquelle sert, en tant que gaz oxydant, à produire du gaz combustible selon le principe de gazéification de l'invention, le gaz combustible produit étant réintroduit dans le four utilisateur pour y être brûlé. Ce four utilisateur peut être tout système reposant sur la combustion d'un gaz combustible comme un four de verrerie (fusion du verre, four float de transformation en verre plat, etc.). Notamment, le four peut être du type à régénérateur ou récupérateur, c'est à-dire qu'une partie de la chaleur des fumées pourra déjà avoir été récupérée par un régénérateur ou récupérateur avant d'être envoyé dans la chaudière pour vaporiser l'eau. On sait que les fumées ressortent de tels régénérateurs ou récupérateurs encore à de hautes températures, généralement inférieures à 600°C mais généralement supérieures à 300 °C et c'est pourquoi le dispositif est extrêmement avantageux puisque ces calories, habituellement rejetées dans l'atmosphère avec les fumées, servent ici très utilement à vaporiser de l'eau dans le cadre d'un système de production énergétique. Il est également décrit un dispositif industriel comprenant
- une unité de production comprenant un brûleur de carburant gazeux générant des gaz de combustion,
- une chaudière produisant de la vapeur d'eau (bien entendu, ceci recouvre le fait qu'il puisse y avoir plusieurs chaudières),
- une unité de production de gaz combustible comprenant la réaction d'un gaz oxydant comprenant de la vapeur d'eau avec une matière organique,
les gaz de combustion étant amenés à la chaudière pour vaporiser de l'eau et produire de la vapeur d'eau, la vapeur d'eau produite par la chaudière étant amenée à l'unité de production de gaz combustible pour réagir avec la matière organique, le gaz combustible étant amené à l'unité de production pour y être brûlé en tant que carburant gazeux. Dans ce cadre, l'unité de production de gaz combustible peut fonctionner selon le procédé de l'invention, c'est-à-dire avec un bain de silicate, mais il peut aussi s'agir d'une unité fonctionnant selon les principes connus en lit fixe ou fluidisé.

Ainsi, l'invention concerne également le procédé de fabrication industrielle continu utilisant le dispositif industriel qui vient d'être décrit. Ce procédé comprend
- une production en continu dans une unité de production industrielle comprenant un brûleur de carburant gazeux générant des gaz de combustion,
- une production en continu de vapeur d'eau dans une chaudière,
- une production en continu de gaz combustible dans une unité de production de gaz combustible comprenant la réaction d'un gaz oxydant comprenant de la vapeur d'eau avec une matière organique, les gaz de combustion étant amenés à la chaudière pour vaporiser de l'eau et produire de la vapeur d'eau, la vapeur d'eau produite par la chaudière étant amenée à l'unité de production de gaz combustible pour réagir avec la matière organique, le gaz combustible étant amené à l'unité de production industrielle pour y être brûlé en tant que carburant gazeux,
la production de gaz combustible fonctionnant selon le procédé de l'une des revendications 1 à 14.

Les matières organiques pouvant être introduites dans le silicate peuvent être des matières solides ou liquides combustibles comme de la biomasse et/ou des déchets comme les pneus usagés, les plastiques, résidus de broyage automobile, boues , matières combustibles de substitutions (dites « MCS »), voire même des déchets ménagers. Les matières organiques peuvent être de nature biologique ou être issus de l'industrie agro-alimentaire. Il peut s'agir de farines animales. Il peut s'agir de biomasse notamment du type : pailles, tiges de miscanthus, etc. Il peut aussi s'agir de charbon, lignite, schistes bitumineux, tourbe, etc. Ces matières peuvent aussi être des déchets de bois, de papier de l'industrie de la papeterie. Elles peuvent aussi être constituées de polymères organiques, par exemple du polyéthylène, du polypropylène, du polystyrène, des résidus de pneumatiques, ou de broyage de composants automobile. Les matières organiques peuvent être intimement mêlées à des matières inorganiques venant enrichir utilement la composition. Par exemple, ce peut être du sable pollué par une marée noire, le sable venant enrichir le silicate en silice alors que l'hydrocarbure polluant est source du gaz combustible. On peut aussi gazéifier des sables naturels contenant des hydrocarbures comme les schistes bitumineux. Il peut aussi s'agir de composites verre/plastique. On peut citer les vitrages feuilletés par exemple, associant au moins un verre avec au moins une feuille en polymère thermoplastique ou non, du type polyvinylbutyral PVB, éthylène- vinyl acétate EVA , polyuréthane PU ou polyéthylène-téréphtalate PET. On peut aussi citer les matériaux composites à base de polymère renforcé par du fil de verre (ou du fil de carbone ou autre type de fil de renfort), utilisés dans l'industrie automobile, ou dans les bateaux par exemple. On peut mentionner aussi les composites verre/métal (vitrages munis d'éléments de connectique, de revêtements métalliques). Ainsi, le dispositif peut servir à la valorisation de déchets organiques.

Le silicate se charge progressivement de cendres minérales issues de la matière combustible introduite. On peut l'évacuer en continu, notamment au moyen d'un trop-plein à siphon (pour éviter la sortie de gaz combustible) connecté à la cuve principale. On peut assurer la constance de la viscosité du silicate à une température donnée en analysant sa composition chimique et en introduisant les oxydes correcteurs (CaO, Fe₂O₃...) avec les matières combustibles. La nature et la quantité d'oxyde correcteur dépend bien entendu de la nature des matières introduites.

Le dispositif peut être intégré à une installation industrielle (comme un four de verrerie) qui est alors capable de se passer totalement ou partiellement de combustible fossile. Pour le cas d'une utilisation du gaz produit dans des brûleurs, on peut n'équiper qu'un nombre limité de brûleurs avec ce gaz de gazéification, les autres brûleurs restant au fuel ou au gaz naturel. On peut donc ainsi baisser proportionnellement les émissions de CO₂ taxable et l'on peut aussi baisser le prix de l'énergie.

Le dispositif est bon marché, il fait appel à des matériaux peu onéreux et sa taille est compacte comparé à ceux de l'art antérieur qui utilisent des lits fixes ou fluidisés.

Les matières organiques introduites sont généralement froides en comparaison avec la température du bain de silicate. Si les gaz formés par le procédé selon l'invention passent à proximité ou dans la zone d'enfournement de ces matières, d'une part les matières organiques sont réchauffées par ces gaz, mais d'autre part les gaz se refroidissent, ce qui peut présenter l'inconvénient de générer des goudrons, et par ailleurs, cette température abaissée est éventuellement moins favorable dans le cadre de l'utilisation finale. C'est pourquoi on peut avantageusement obliger le gaz combustible produit à passer par une zone plus chaude de la surface du silicate, située de préférence en aval par rapport au sens d'écoulement ou d'évacuation du silicate. Cette zone plus chaude est notamment produite par un apport calorifique pouvant être d'origine électrique. Elle peut aussi être produite par combustion immergée d'une partie du gaz combustible produit avec O₂ ou de l'air. Ce fonctionnement est du type « marche inversée » car les gaz de gazéification (gaz combustible créé) vont dans le sens froid vers chaud (comme dans les gazéificateurs à lit fluidisé à co-courant). Ici, les gaz sont formés dans la première chambre (donc ils peuvent être assez froids car la matière organique introduite est froide) mais ensuite ils sont forcés à passer dans la zone basse entre voûte et silicate ce qui les réchauffe avec l'avantage de décomposer les goudrons et poursuivre la gazéification. Le gaz combustible peut donc être réchauffé en passant sous une voute abaissée avant d'être évacué en cheminée.

La figure 1 représente le dispositif dans le mode de réalisation selon lequel le gaz combustible fabriqué n'est pas séparé des gaz de combustion. Une cuve 1 contient un bain fondu de silicate 2 à 1200°C de viscosité inférieure à 1000 poises dans lequel on introduit sur la surface du bain de la biomasse MCS par l'intermédiaire d'une vis sans fin 3. On introduit également sous le niveau de la surface du bain de la vapeur d'eau à 400°C par un conduit 4 et de l'air à 500°C par un conduit 5. On collecte par une cheminée unique 6 le gaz combustible formé mélangé au gaz de combustion. On introduit continuellement un mélange de matières vitrifiables par l'intermédiaire de la même vis sans fin afin de conserver la composition du silicate sensiblement constante. Le bain de silicate est maintenu en température par des électrodes. Le silicate est évacué en continu en fonction de l'évolution de sa composition par la gorge 7.

La figure 2 représente le dispositif dans le mode de réalisation selon lequel le gaz combustible fabriqué est séparé des gaz de combustion. Une cuve 21 contient un bain fondu de silicate 22 à 1300°C de viscosité inférieure à 1000 poises dans lequel on introduit sous la surface du bain de la biomasse MCS par l'intermédiaire d'une vis sans fin 23. De la vapeur d'eau est introduite dans une première zone de la cuve par l'intermédiaire d'un conduit 24, alors que de l'air est introduit dans une seconde zone de la cuve assez éloignée de la première zone, par l'intermédiaire d'un conduit 25. Le bain 22 est agité par un agitateur rotatif 28 pour que la chaleur de la combustion crée dans la seconde zone soit apportée à la seconde zone. Une première cheminée 26 placée au-dessus de la première zone collecte le gaz combustible produit et une seconde cheminée 27 placée au-dessus de la seconde zone collecte les gaz de combustion. Ces gaz de combustion peuvent être dirigés vers une chaudière ou un circuit de collecte de fumées d'un four utilisateur afin d'en récupérer les calories. On introduit continuellement un mélange de matières vitrifiables par l'intermédiaire de la même vis afin de conserver la composition du silicate sensiblement constante. Le silicate est évacué en continu en fonction de l'évolution de sa composition par la gorge 29.

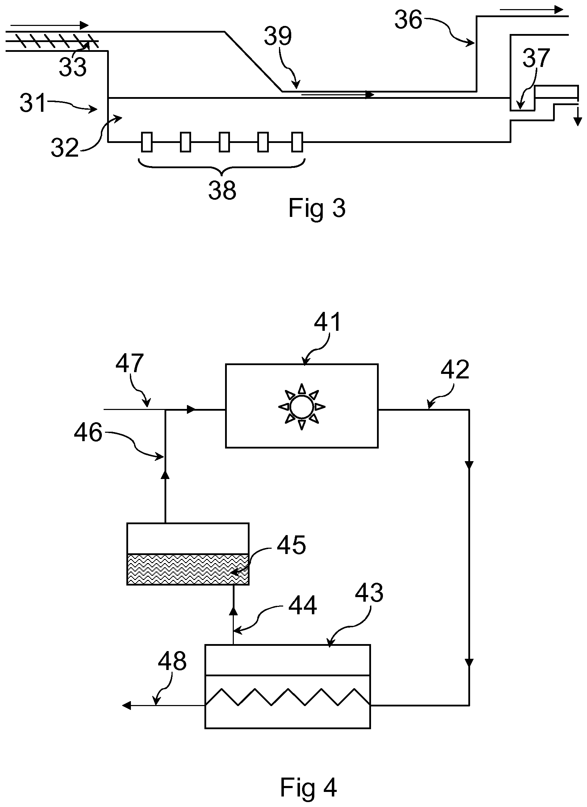

La figure 3 représente le dispositif dans le mode de réalisation à « marche inversée » selon lequel le gaz combustible fabriqué n'est pas séparé des gaz de combustion et est forcé à passer dans une zone basse entre voûte et silicate pour être réchauffé. Une cuve 31 contient un bain fondu de silicate 32 à 1300 °C de viscosité 50 poises dans lequel on introduit au-dessus de la surface du bain de la biomasse MCS par l'intermédiaire d'une vis sans fin 33. On collecte par une cheminée unique 36 le gaz combustible formé mélangé au gaz de combustion. On introduit aussi continuellement un mélange de matières vitrifiables (apportant de la silice, du CaO, du Fe₂O₃) par l'intermédiaire de la vis 33 afin de conserver la composition du silicate sensiblement constante. Le silicate est évacué en continu en fonction de l'évolution de sa composition par la gorge 37. Le bain de silicate est aussi réchauffé par l'intermédiaire de brûleurs immergés 38 alimentés en O₂ (comburant) et gaz combustibles produits refroidis éventuellement enrichis d'autres gaz combustibles lesquels chauffent plus fortement la zone recevant la masse à gazéifier et la zone centrale du bain (située sous la voûte surbaissée). Le gaz combustible formé est forcé à lécher cette zone plus chaude du bain liquide par passage sous une partie abaissée 39 de la voûte. De façon remarquable, c'est la combustion immergée O₂/gaz combustible qui est source « in situ » du gaz oxydant comprenant de l'eau et du CO₂ qui va lui-même réagir avec la matière organique se trouvant plus haut dans ou sur le bain de silicate fondu. Il n'est pas exclu d'ajouter du gaz oxydant de l'extérieur, mais cela n'est pas indispensable. Finalement, le gaz combustible évacué par la cheminée 36 contient moins de 30 % de CO₂.

La figure 4 représente un dispositif industriel fonctionnant en boucle en ce qui concerne l'utilisation de la chaleur des fumées. Le dispositif comprend un four utilisateur 41 de gaz qui le brûle et produit des fumées s'échappant par 42. Ces fumées passent dans une chaudière 43 pour vaporiser de l'eau qui est envoyée via 44 au bain de silicate 45 fonctionnant selon le principe de l'invention, le gaz combustible produit étant acheminé via 46 au four 41 pour être brûlé. Le four 41 est alimenté en gaz provenant du bain de silicate, mais aussi d'une autre source 47. Les fumées, après avoir servi à évaporer l'eau, sont évacuées par 48 dans la cheminée principale du four.

### EXEMPLE 1

Dans le dispositif de la figure 1, on a introduit 9 tonnes/jour de résidus de bois et 1000 Nm³/h d'air chargé de 83% en volume de vapeur d'eau pour assurer la gazéification. L'apport calorifique électrique au sein du bain de silicate était de 500 kW. Le bois introduit génère environ 3% en poids de cendres et l'on évacue 300 kg/jour de silicate chargé de cendres. La composition (% molaires) du gaz de biomasse était :

| | |
|---|---|
| H₂ | : 22,3% |
| CH₄ | : 4,4% |
| CO | : 20,9% |
| CO₂ | : 18,6% |
| N₂ | : le complément pour atteindre 100% |

On voit notamment que l'on a créé plus de H₂ que de CO.

Le gaz produit avait un pouvoir calorifique inférieur de 9MJ/Nm³.

Si l'on considère que le bois a une énergie de 12MJ/kg, on estime que l'on a récupéré 80% de cette énergie par gazéification selon l'invention.

### EXEMPLE 2

On procède comme pour l'exemple 1 sauf que l'air introduit ne contenait pas d'eau. La composition (% molaires) du gaz de biomasse était :

| | |
|---|---|
| H₂ | : 10,6 % |
| CH₄ | : 3,2 % |
| CO | : 30 % |
| CO₂ | : 6% |
| N₂ | : le complément pour atteindre 100% |

On voit que l'on a créé plus de CO que de H₂.

Le gaz produit avait un pouvoir calorifique inférieur de 7 MJ/Nm³. L'apport calorifique électrique au sein du bain de silicate était de 300 kW.

Si l'on considère que le bois a une énergie de 12 MJ/kg, on estime que l'on a récupéré 80 % de cette énergie par gazéification sans vapeur d'eau.

## Revendications

1. Procédé de fabrication de gaz combustible ayant un pouvoir calorifique inférieur d'au moins 1 MJ/Nm3, comprenant la réaction d'un gaz oxydant comprenant de la vapeur d'eau ou de l'oxygène ou du CO2 avec une matière organique en contact avec un bain de silicate fondu contenu dans une cuve et comprenant un apport calorifique dans le silicate fondu, ledit procédé fonctionnant en continu, du silicate étant régulièrement évacué de la cuve et des matières vitrifiables étant régulièrement introduites pour alimenter le bain de silicate, produisant un renouvellement continu du bain de silicate permettant d'évacuer en continu du fer dont la concentration reste ainsi en-dessous de sa limite de précipitation dans le bain.

2. Procédé selon la revendication précédente, **caractérisé en ce que** le silicate comprend 40 à 80 % en poids de SiO₂.

3. Procédé selon la revendication précédente, **caractérisé en ce que** la somme de la masse de CaO, de Fe₂O₃ et d'oxyde d'alcalin contenus dans le silicate va de 5 à 60 % en poids.

4. Procédé selon l'une des revendications précédentes **caractérisé en ce que** l'apport calorifique est de type combustion immergée.

5. Procédé selon la revendication précédente, **caractérisé en ce que** le comburant de la combustion immergée comprend plus de 80 vol % d'oxygène pur.

6. Procédé selon la réaction précédente, **caractérisé en ce que** la flamme de la combustion immergée est oxydante.

7. Procédé selon l'une des deux revendications précédentes, **caractérisé en ce que** le gaz oxydant est généré par la combustion immergée.

8. Procédé selon l'une des trois revendications précédentes, **caractérisé en ce que** la combustion immergée d'une part et la réaction entre le gaz oxydant et la matière organique d'autre part sont réalisés en des zones suffisamment séparées pour que les fumées de combustion et le gaz combustible puissent être récupérés par des cheminées différentes.

9. Procédé selon l'une des quatre revendications précédentes, **caractérisé en ce que** le carburant de la combustion immergée comprend du gaz combustible créé par le procédé lui-même, ce gaz étant éventuellement mélangé à d'autres gaz combustibles.

10. Procédé selon l'une des revendications précédentes, **caractérisé en ce que** le gaz oxydant rencontre suffisamment de matière organique pour que la somme des pourcentages molaires d'hydrogène et de monoxyde de carbone dans le gaz combustible soit d'au moins 10%.

11. Procédé selon l'une des revendications précédentes, **caractérisé en ce que** le gaz oxydant comprend au moins 30% en volume de vapeur d'eau.

12. Procédé selon l'une des revendications précédentes, **caractérisé en ce que** le silicate est à une température entre 800 et 1700°C.

13. Procédé selon l'une des revendications précédentes **caractérisé en ce que** l'apport calorifique est électrique.

14. Procédé selon l'une des revendications précédentes **caractérisé en ce que** le gaz combustible est réchauffé en passant sous une voute abaissée avant d'être évacué en cheminée.

15. Procédé de fabrication industrielle continu comprenant
- une production en continu dans une unité de production industrielle comprenant un brûleur de carburant gazeux générant des gaz de combustion,
- une production en continu de vapeur d'eau dans une chaudière,
- une production en continu de gaz combustible dans une unité de production de gaz combustible comprenant la réaction d'un gaz oxydant comprenant de la vapeur d'eau avec une matière organique,
les gaz de combustion étant amenés à la chaudière pour vaporiser de l'eau et produire de la vapeur d'eau, la vapeur d'eau produite par la chaudière étant amenée à l'unité de production de gaz combustible pour réagir avec la matière organique, le gaz combustible étant amené à l'unité de production industrielle pour y être brûlé en tant que carburant gazeux,
la production de gaz combustible fonctionnant selon le procédé de l'une des revendications 1 à 14.

## Patentansprüche

1. Verfahren zur Herstellung von Brenngas mit einem Heizwert, der mindestens 1 MJ/Nm3 unterschreitet, umfassend Umsetzen eines oxidierenden Gases, das Wasserdampf oder Sauerstoff oder CO2 umfasst, mit einem organischen Material in Kontakt mit einem Silikatschmelzbad, das in einer Wanne enthalten ist und einen Wärmebeitrag zum geschmolzenen Silikat leistet, wobei das Verfahren kontinuierlich ist, wobei das Silikat regelmäßig aus der Wanne abgeführt wird und wobei verglasbare Stoffe regelmäßig hinzugegeben werden, um das Silikatbad zu versorgen, woraus sich eine kontinuierliche Erneuerung des Silikatbads ergibt, das es ermöglicht, kontinuierlich Eisen abzuführen, dessen Konzentration somit unterhalb seiner Ausfällungsgrenze im Bad bleibt.

2. Verfahren nach dem vorstehenden Anspruch, **dadurch gekennzeichnet, dass** das Silikat 40 - 80 Gew. % SiO₂ umfasst.

3. Verfahren nach dem vorstehenden Anspruch, **dadurch gekennzeichnet, dass** die Summe der im Silikat enthaltenen Masse von CaO, Fe₂D₃ und alkalischem Oxid 5 - 60 Gew. % beträgt.

4. Verfahren nach einem der vorstehenden Ansprüche, **dadurch gekennzeichnet, dass** die Wärme durch Tauchverbrennen eingebracht wird.

5. Verfahren nach dem vorstehenden Anspruch, **dadurch gekennzeichnet, dass** die Verbrennungsluft der Tauchverbrennung mehr als 80 Vol. % reinen Sauerstoff umfasst.

6. Verfahren nach dem vorstehenden Anspruch, **dadurch gekennzeichnet, dass** die Flamme der Tauchverbrennung oxidierend ist.

7. Verfahren nach einem der beiden vorstehenden Ansprüche, **dadurch gekennzeichnet, dass** das oxidierende Gas durch die Tauchverbrennung erzeugt wird.

8. Verfahren nach einem der drei vorstehenden Ansprüche, **dadurch gekennzeichnet, dass** die Tauchverbrennung einerseits und die Reaktion zwischen dem oxidierenden Gas und dem organischen Stoff andererseits in Bereichen erfolgen, die ausreichend getrennt sind, damit die Verbrennungsabgase und das Brenngas über unterschiedliche Kamine zurückgewonnen werden können.

9. Verfahren nach einem der vier vorstehenden Ansprüche, **dadurch gekennzeichnet, dass** die Verbrennungsluft der Tauchverbrennung durch das Verfahren selbst erzeugtes Brenngas umfasst, wobei dieses Gas ggf. mit anderen Brengasen gemischt ist.

10. Verfahren nach einem der vorstehenden Ansprüche, **dadurch gekennzeichnet, dass** das oxidierende Gas auf genügend organischen Stoff trifft, damit die Summe der Molprozentanteile an Wasserstoff und Kohlenmonoxid im Brenngas mindestens 10 % beträgt.

11. Verfahren nach einem der vorstehenden Ansprüche, **dadurch gekennzeichnet, dass** das oxidierende Gas mindestens 30 Vol. % Wasserdampf umfasst.

12. Verfahren nach einem der vorstehenden Ansprüche, **dadurch gekennzeichnet, dass** die Temperatur des Silikats zwischen 800 und 1700 °C liegt.

13. Verfahren nach einem der vorstehenden Ansprüche, **dadurch gekennzeichnet, dass** der Wärmebeitrag elektrisch ist.

14. Verfahren nach einem der vorstehenden Ansprüche, **dadurch gekennzeichnet, dass** das Brenngas beim Strömen unter einem abgesenkten Dach aufgewärmt wird, bevor es durch den Kamin austritt.

15. Verfahren zur kontinuierlichen industriellen Herstellung, umfassend
- kontinuierliche Erzeugung in einer industriellen Erzeugungsanlage, umfassend einen Brenner für gasförmigen Brennstoff, der Verbrennungsgase erzeugt;
- kontinuierliche Erzeugung von Wasserdampf in einem Kessel,
- kontinuierliche Erzeugung von Brenngas in einer Brenngas-Erzeugungsanlage, umfassend Umsetzen eines oxidierenden Gases, das Wasserdampf umfasst, mit einem organischen Stoff,
wobei die Verbrennungsgase dem Kessel zugeführt werden, um das Wasser zu verdampfen und den Wasserdampf zu erzeugen, wobei der vom Kessel erzeugte Wasserdampf der Brenngas-Erzeugungsanlage zugeführt wird, um mit dem organischen Stoff eine Reaktion einzugehen, wobei das Brenngas der industriellen Erzeugungsanlage zugeführt wird, um dort als gasförmiger Brennstoff verbrannt zu werden,
wobei die Brenngaserzeugung dem Verfahren nach einem der Ansprüche 1 - 14 erfolgt.

## Claims

1. A process for manufacturing a combustible gas having a lower heating value of at least 1 MJ/Nm³, comprising the reaction of an oxidizing gas comprising steam or oxygen or CO₂ with an organic material in contact with a molten silicate bath held in a tank and comprising a heat supply into the molten silicate, said process operating continuously, silicate being regularly drained from the tank and vitrifiable materials being regularly introduced in order to feed the silicate bath, producing a continuous renewing of the silicate bath making it possible to continuously discharge the iron, the concentration of which thus remains below its precipitation limit in the bath..

2. The process as claimed in the preceding claim, **characterized in that** the silicate comprises 40 to 80% by weight of SiO₂.

3. The process as claimed in the preceding claim, **characterized in that** the sum of the mass of CaO, of Fe₂O₃ and of alkali metal oxide contained in the silicate ranges from 5 to 60% by weight.

4. The process as claimed in one of the preceding claims, **characterized in that** the heat supply is of submerged combustion type.

5. The process as claimed in the preceding claim, **characterized in that** the oxidizer for the submerged combustion comprises more than 80 vol% of pure oxygen.

6. The process as claimed in the preceding claim, **characterized in that** the flame of the submerged combustion is oxidizing.

7. The process as claimed in either of the two preceding claims, **characterized in that** the oxidizing gas is generated by the submerged combustion.

8. The process as claimed in one of the three preceding claims, **characterized in that** the submerged combustion, on the one hand, and the reaction between the oxidizing gas and the organic material, on the other hand, are carried out in zones that are sufficiently separated so that the combustion flue gases and the combustible gas can be recovered through different chimneys.

9. The process as claimed in one of the four preceding claims, **characterized in that** the fuel for the submerged combustion comprises the combustible gas created by the process itself, this gas optionally being mixed with other combustible gases.

10. The process as claimed in one of the preceding claims, **characterized in that** the organic material is in a sufficient amount so that the sum of the molar percentages of hydrogen and of carbon monoxide in the combustible gas is at least 10%.

11. The process as claimed in one of the preceding claims, **characterized in that** the oxidizing gas comprises at least 30% by volume of steam.

12. The process as claimed in one of the preceding claims, **characterized in that** the silicate is at a temperature between 800 and 1700°C.

13. The process as claimed in one of the preceding claims, **characterized in that** the heat supply is electric.

14. The process as claimed in one of the preceding claims, **characterized in that** the combustible gas is heated by passing under a lowered crown before being discharged via a chimney.

15. A continuous industrial manufacturing process comprising:
- continuous production, in an industrial production unit comprising a gaseous fuel burner that generates combustion gases;
- continuous production of steam in a boiler; and
- continuous production of combustible gas in a unit for producing combustible gas comprising the reaction of an oxidizing gas comprising steam with an organic material, the combustion gases being conveyed to the boiler in order to vaporize water and produce steam, the steam produced by the boiler being conveyed to the unit for producing combustible gas in order to react with the organic material, the combustible gas being conveyed to the industrial production unit in order to be burnt therein as a gaseous fuel,
the production of combustible gas operating according to the process of one of claims 1 to 14.
